# EUROPEAN PATENT APPLICATION

(11) **EP 4 451 504 A1**
(43) Date of publication of application: **23.10.2024**
(21) Application number: 23882874.3
(22) Date of filing: 29.08.2023
(51) Int. Cl.: H02J 7/00, H01M 4/36, H01M 4/02

(54) **BATTERY CAPACITY RECOVERY APPARATUS AND BATTERY CAPACITY RECOVERY METHOD**

(30) Priority: 26.10.2022 KR 20220139218; 28.08.2023 KR 20230113145
(71) Applicant: LG Energy Solution, Ltd., Seoul 07335 (KR)
(72) Inventor: AHN, Ji-Hoon, Daejeon 34122 (KR); KIM, Bong-Soo, Daejeon 34122 (KR)
(74) Representative: Goddar, Heinz J.
(86) International application number: PCT/KR2023/012791
(87) International publication number: WO 2024/090767

(57) **Abstract**

A battery capacity recovery apparatus and a battery capacity recovery method are provided. The battery capacity recovery apparatus includes a sensing unit configured to measure voltage and current of a battery, and a control unit configured to determine an electric state of the battery based on time series data of each of the voltage and the current of the battery. When it is determined to execute the capacity recovery process based on the electric state of the battery, the control unit is configured to sequentially execute the first capacity recovery routine and the second capacity recovery routine. The first capacity recovery routine is a procedure that discharges the battery until a SOC of the battery decreases to a reference SOC. The second capacity recovery routine is a procedure that rests the battery during a reference time or more from a completion time point of the first capacity recovery routine.

## Description

### TECHNICAL FIELD

The present disclosure relates to an apparatus and method for recovering at least a portion of deteriorated capacity of a rechargeable battery.

The present application claims priority to Korean Patent Application No. 10-2022-0139218 filed on October 26, 2022 in the Republic of Korea and Korean Patent Application No. 10-2023-0113145 filed on August 28, 2023 in the Republic of Korea, the disclosures of which are incorporated herein by reference.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

Among various types of rechargeable batteries, lithium-sulfur batteries have recently been attracting attention. A lithium-sulfur battery contains a sulfur-based material with an S-S bond (sulfur-sulfur bond) as a positive electrode active material and lithium metal as a negative electrode active material. Sulfur, the main material of the positive electrode active material, has the advantages of being abundant in resources worldwide, being non-toxic, and having a low weight per atom.

In addition, the application area of various types of rechargeable batteries is expanding to electric vehicles (EVs), energy storage systems (ESSs), etc., and in the case of lithium-sulfur batteries, it can be said to be advantageous in achieving higher energy storage density (2,600 Wh/kg or less) per weight than that of lithium-ion batteries.

Rechargeable batteries, including lithium-sulfur batteries, can generally deteriorate gradually as charging and discharging are repeated. Specifically, as the charge/discharge cycle is repeated, the full charge capacity (FCC) of the battery gradually decreases. In other words, when a deteriorated battery is fully charged, the amount of energy available (i.e., dischargeable capacity) is relatively reduced compared to the amount of energy available when a new battery is fully charged.

This reduction in dischargeable capacity has the problem of reducing the use time and driving distance of loads such as electronic devices or electric vehicles. Therefore, there is a need to develop technology that can recover the reduced discharge capacity of a deteriorated battery.

### DISCLOSURE

### Technical Problem

The present disclosure is designed to solve the problems of the related art, and therefore the present disclosure is directed to providing a battery capacity recovery apparatus and method for performing a capacity recovery process to recover at least a portion of the full charge capacity reduced due to degradation, depending on the electrical state of the battery.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A battery capacity recovery apparatus according to one aspect of the present disclosure comprises a sensing unit configured to measure voltage and current of a battery, and a control unit configured to determine an electric state of the battery based on time series data of each of the voltage and the current of the battery. The control unit is configured to, based on the electric state of the battery, determine whether to execute a capacity recovery process including a first capacity recovery routine and a second capacity recovery routine. When it is determined to execute the capacity recovery process, the control unit is configured to sequentially execute the first capacity recovery routine and the second capacity recovery routine. The first capacity recovery routine is a procedure that discharges the battery until a SOC of the battery decreases to a reference SOC. The second capacity recovery routine is a procedure that allows the battery to rest during a reference time or more from a completion time point of the first capacity recovery routine.

At least one of the reference SOC and the reference time may be predetermined.

The reference SOC may be 0% or more and less than 20%. The reference time may be 10 hours or more.

The control unit may be configured to determine at least one of a reference constant current associated with the first capacity recovery routine, the reference SOC, and the reference time, based on a full charge capacity of the battery.

The control unit may be configured to determine the reference constant current from first relationship data in which a predetermined positive corresponding relationship between the full charge capacity and the reference constant current is defined.

The control unit may be configured to determine the reference SOC from second relationship data in which a predetermined positive corresponding relationship between the full charge capacity and the reference SOC is defined.

The control unit may be configured to determine the reference time from third relationship data in which a predetermined negative corresponding relationship between the full charge capacity and the reference time is defined.

The control unit may be configured to execute the capacity recovery process under the condition that an increase amount of accumulated discharging capacity of the battery from a completion time point of a previous capacity recovery process is greater than or equal to a reference capacity and the battery is at rest.

The control unit may be configured to determine the reference capacity based on a full charge capacity of the battery.

The control unit may be configured to execute the capacity recovery process under the condition that a decrease amount of a full charge capacity of the battery from a completion time point of a previous capacity recovery process is greater than or equal to a threshold capacity and the battery is at rest.

The battery may include lithium metal as a negative electrode active material and sulfur as a positive electrode active material.

A battery pack according to another aspect of the present disclosure may comprise the battery capacity recovery apparatus.

An electric vehicle according to still another aspect of the present disclosure may comprise the battery pack.

A battery control method according to still another aspect of the present disclosure comprises: determining an electric state of a battery based on time series data of each of voltage and current of the battery; based on the electric state of the battery, determining whether to execute a capacity recovery process including a first capacity recovery routine and a second capacity recovery routine; when it is determined to execute the capacity recovery process, executing the first capacity recovery routine; and in response to completion of the first capacity recovery routine, executing the second capacity recovery routine. The first capacity recovery routine is a procedure that discharges the battery until a SOC of the battery decreases to a reference SOC. The second capacity recovery routine is a procedure that allows the battery to rest during a reference time or more from a completion time point of the first capacity recovery routine.

### Advantageous Effects

According to at least one of the embodiments of the present disclosure, by performing a capacity recovery process on the battery, at least a portion of the deteriorated full charge capacity of the battery due to various causes such as repeated charging and discharging from a new state can be recovered. In particular, the capacity recovery process can be applied more effectively to lithium-sulfur batteries.

In addition, according to at least one of the embodiments of the present disclosure, the service life of the battery can be extended by preemptively performing a capacity recovery process before the service life of the battery expires.

In addition, according to at least one of the embodiments of the present disclosure, by determining whether performance of the capacity recovery process is necessary according to the electrical state of the battery and then performing the capacity recovery process only when necessary, it is possible to eliminate the side effect that the battery deteriorates more quickly due to excessive performance of the capacity recovery process.

In addition, according to at least one of the embodiments of the present disclosure, by adjusting at least one control parameter (reference constant current, etc. described later) related to the capacity recovery process according to the electrical state of the battery, it is possible to minimize the acceleration of deterioration caused by the discharge procedure of the capacity recovery process, and as a result, it is possible to slow down the rate of battery deterioration.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing the configuration of a battery capacity recovery apparatus according to the present disclosure.
FIG. 2 is a flow chart schematically showing a battery capacity recovery method according to the first embodiment of the present disclosure.
FIG. 3 is a graph referenced to explain the difference in battery life characteristics depending on whether or not the capacity recovery process according to one embodiment of the present disclosure is applied.
FIG. 4 is a flow chart schematically showing the battery capacity recovery method according to the second embodiment of the present disclosure.
FIG. 5 is a flow chart schematically showing the battery capacity recovery method according to the third embodiment of the present disclosure.
FIG. 6 is a flow chart schematically showing the battery capacity recovery method according to the fourth embodiment of the present disclosure.
FIG. 7 is a drawing showing the appearance of an electric vehicle according to the present disclosure.
FIG. 8 is a diagram schematically showing the configuration of the electric vehicle shown in FIG. 7.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise. Additionally, terms such as "... unit" described in the specification refer to a unit that processes at least one function or operation, and may be implemented as hardware, software, or a combination of hardware and software.

In addition, throughout the specification, when a portion is referred to as being "connected" to another portion, it is not limited to the case that they are "directly connected", but it also includes the case where they are "indirectly connected" with another element being interposed between them.

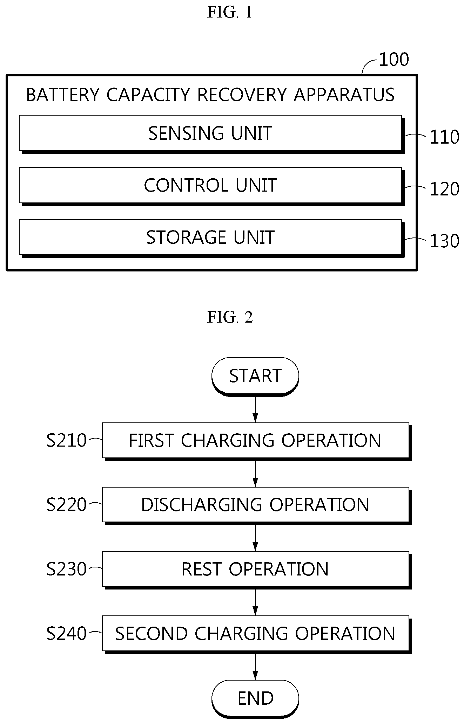

FIG. 1 is a diagram schematically showing the configuration of a battery capacity recovery apparatus according to the present disclosure.

Referring to FIG. 1, the battery capacity recovery apparatus 100 may include a sensing unit 110, a control unit 120, and a storage unit 130.

In FIG. 1, the sensing unit 110 and the control unit 120 are shown as distinct components, but this is only an example, and in various embodiments, two or more components may be integrated and operated as one. Additionally, in the following description, at least some functions described as being implemented by a certain component may be implemented by another component.

Here, the battery refers to an independent cell that has a negative terminal and a positive terminal and is physically separable.

As an example, a lithium-ion battery or a lithium polymer battery may be considered as a battery. Here, the battery may have various structures depending on the type of positive electrode active material. For example, the battery may be formed in at least one of a layered structure, a spinel structure, or an olivine structure. The battery may be a battery to which a positive electrode active material having a layered structure is applied. For example, the battery may be a battery to which NCM series positive electrode active material is applied. In another embodiment, the battery may be a battery to which a positive electrode active material having an olivine structure is applied. For example, the battery may be a battery to which LFP series positive electrode active material is applied.

Preferably, the battery may contain lithium metal as its negative electrode active material and sulfur as its positive electrode active material.

Here, the battery may mean a battery module in which a plurality of cells are connected in series and/or parallel. Below, for convenience of explanation, the battery is explained as meaning one independent cell.

The sensing unit 110 may be configured to detect at least one battery parameter (e.g., voltage, current) indicating the electric state of the battery. The electric state of the battery may include various characteristics representing, for example, the usage state, physical state, and chemical state of the battery.

The control unit 120 is operatively connected to other components such as the sensing unit 110 or the storage unit 130 of the battery capacity recovery apparatus 100 and may control various operations of the battery capacity recovery apparatus 100.

The control unit 120 may perform various operations of the battery capacity recovery apparatus 100 by executing one or more instructions. The control unit 120 may optionally include a processor, an application-specific integrated circuit (ASIC), a chipset, a logic circuit, a register, a communication modem, a data processing device, etc. known in the art to execute various control logics performed in the present disclosure. Also, when the control logic is implemented as software, the control unit 120 may be implemented as a set of program modules. At this time, the program module may be stored in the storage unit 130 and executed by the control unit 120.

The control unit 120 may perform a capacity recovery process for the battery based on the electric state of the battery. The control unit 120 may be configured to perform a capacity recovery process that can recover at least a portion of the reduced capacity of the degraded battery based on the electric state of the battery.

As an example of the capacity recovery process that can be performed by the control unit 120, a first charging operation for charging the battery to the first reference SOC, a discharging operation for discharging the battery to the reference SOC or below after the first charging operation, a rest operation for maintaining the rest state for a rest time greater than or equal to a reference time after the discharging operation, and a second charging operation for recharging the battery to the third reference SOC after the rest operation can be sequentially performed.

The storage unit 130 may store data required for each component of the battery capacity recovery apparatus 100 to perform operations and functions, or data generated in the process of performing programs or operations and functions. The storage unit 130 may be internal or external to the control unit 120, and may be connected to the control unit 120 by various well-known means. The storage unit 130 may store at least one program, application, data, or instructions executed by the control unit 120. The type of storage unit 130 is not particularly limited as long as it is known information storage means capable of recording, erasing, updating, and reading data. As an example, the storage unit 130 may be implemented as at least one of a flash memory type, a hard disk type, a solid state disk (SSD) type, a solid disk drive (SDD) type, a multimedia card micro type, a random access memory (RAM), and a static RAM (SRAM), a ROM (Read Only Memory), an EEPROM (Electrically Erasable Programmable Read Only Memory), and a PROM (Programmable Read Only Memory), but the present disclosure is not necessarily limited to the specific form of the storage unit 130. Also, the storage unit 130 may store program codes in which processes executable by the control unit 120 are defined.

Additionally, the storage unit 130 may store information about a preset reference capacity and/or a preset reference cycle number for determining whether or not to perform a capacity recovery process. This will be explained through embodiments described later.

FIG. 2 is a flow chart schematically showing a battery capacity recovery method according to the first embodiment of the present disclosure. The method of FIG. 2 may be provided to be performed by the battery capacity recovery apparatus 100 shown in FIG. 1.

Referring to FIG. 2, the capacity recovery process of the battery may include a first charging operation (S210), a discharging operation (S220), a rest operation (S230), and a second charging operation (S240). The discharging operation (S220) and the rest operation (S230) may correspond to essential routines of the capacity recovery process, and the first charging operation (S210) and the second charging operation (S240) may correspond to optional routines that can be omitted in the capacity recovery process. The discharging operation (S220) and the rest operation (S230) may be referred to as first capacity recovery routine and a second capacity recovery routine, respectively.

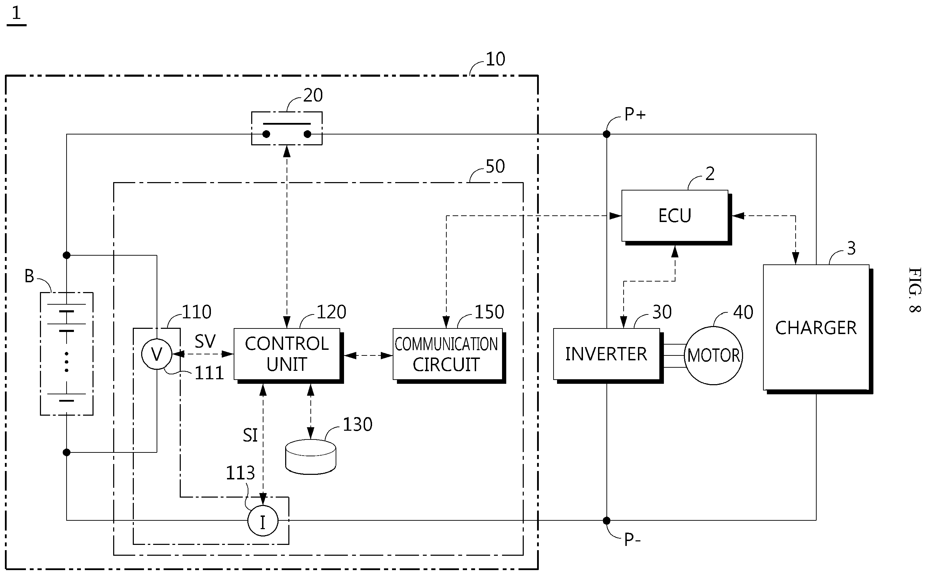

In step S210, the control unit 120 may drive the charger (see FIG. 8) to charge the battery until the SOC of the battery rises to the first reference SOC. Here, the first reference SOC may be a predetermined value stored in the storage unit 130, etc. If the SOC of the battery is already higher than or equal to the first reference SOC, step S210 may not be executed.

Specifically, the control unit 120 may be operably coupled to a charger and a discharging device provided outside the battery capacity recovery apparatus 100. Alternatively, the control unit 120 may be configured to open and close the charging switch of the battery pack, etc. Additionally, the control unit 120 may control the charger and/or the charging switch to allow the battery to be charged. The charger may be configured to supply charging power to the battery at all times during operation or upon request from the control unit 120.

In step S220, the control unit 120 may operate a discharging device to discharge the battery until the SOC of the battery decreases to the second reference SOC. Here, the second reference SOC may be a predetermined value stored in the storage unit 130, etc. In particular, the second reference SOC may be set to a value significantly lower than the first reference SOC for the first charging operation (step S210). For example, the second reference SOC may be smaller than the first reference SOC by 70% or more.

The control unit 120 may control the discharging device and/or the discharging switch of the battery pack to discharge the battery. The discharging device may be configured to supply discharging power from the battery at all times during operation or upon request from the control unit 120.

The control unit 120 may determine the full charge capacity of the battery based on the SOC change amount by step S220 and the discharging capacity of the battery.

In step S230, the control unit 120 may rest the battery during the reference time or more by stopping both the charger and the discharging device (e.g., inverter 30 in FIG. 8).

Specifically, the control unit 120 may block both charging and discharging of the battery during the reference time or more from the completion time point of step S220, thereby maintaining the battery in a rest state. For this purpose, the control unit 120 may control the charger, or the charging switch or the discharging switch of the battery pack.

In step S240, the control unit 120 may drive the charger to recharge the battery so that the SOC of the battery rises to the third reference SOC. Here, the third reference SOC may be a predetermined value stored in the storage unit 130, etc. For example, the third reference SOC may be set to 90%.

When executing the battery capacity recovery method described above with reference to FIG. 2, there is a technical effect of slowing down the degradation rate of the battery. In particular, the battery gradually degrades as charging and discharging are repeated, and battery degradation means a decrease in discharging capacity (full charge capacity). According to the above embodiment of the present disclosure, the capacity of the battery may be recovered to a certain level or above by the capacity recovery process. Therefore, the rate of degradation due to battery use can be effectively slowed down. Therefore, it is possible to achieve the effect of extending the lifespan of the battery and devices equipped with the battery, such as electric vehicles or energy storage systems (ESSs).

When the battery is a lithium-sulfur battery, a better capacity recovery effect can be secured by applying the method of FIG. 2. In the case of a lithium-sulfur battery, if the battery is charged to the first reference SOC and then discharged to the second reference SOC or below and then goes through a rest period during the reference time or more, the proportions of sulfur-containing chemical species (e.g. Li₂S, S, polysulfide, etc.) can be naturally and appropriately redistributed inside or on the surface of the positive and negative electrodes.

Specifically, when performing the above-described capacity recovery process for the battery, the proportions of sulfur-containing chemical species such as sulfur (S), polysulfide, and lithium sulfide (Li₂S) contained in the electrodes and electrolyte of the battery undergoing degradation can be redistributed by spontaneous chemical reactions. In the process of redistributing the proportions of sulfur-containing chemical species, sulfur-containing chemical species that were irreversible due to battery degradation and could not be expressed may change back to a reversible state. Sulfur-containing chemical species that have been changed back to a reversible state can provide usable energy even in the subsequent charging-discharging cycle. The battery capacity recovery apparatus 100 has the effect of acquiring additional discharging capacity that was previously unusable for a battery that has undergone degradation.

At least one of the first reference SOC and the third reference SOC may be set to 100%. That is, the control unit 120 may be configured to fully charge the battery until the SOC of the battery reaches 100% as the first charging operation (step S210). Additionally, the control unit 120 may be configured to charge the battery until the SOC of the battery reaches 100% from the second reference SOC as the second charging operation (step S240). In particular, the control unit 120 can fully charge the battery in both the first charging operation and the second charging operation. In this case, the second charging operation may be a re-fully-charging procedure following the first charging operation serving as a fully-charging procedure.

In particular, when the battery is recharged to correspond to SOC 100% after passing through a rest period during the reference time or more, not only capacity is recovered by the rest period but also additional capacity is recovered by the re-fully-charging procedure, and this capacity recovery effect can continue in charging-discharging cycles after the method as shown in FIG. 2 is completed. In other words, the full charge capacity recovered according to the capacity recovery process is not recovered one-time only in the charging or discharging stage, but can be continuously maintained even in the charging-discharging cycles after performing the capacity recovery process. Therefore, a battery to which the capacity recovery process is applied can store relatively more available energy than before performing the capacity recovery process.

The second reference SOC related to the discharging operation (S220) may be a predetermined value that falls within the range of SOC 20% or less.

As an example, the second reference SOC for discharging operation (S220) may be set to 20%. In this case, the control unit 120 may discharge the battery until the SOC of the battery decreases to the second reference SOC. If the SOC of the battery reaches 20% while executing the discharging operation (S220), the control unit 120 may terminate the discharging operation and allow the rest operation (S230) to be performed.

As another example, the second reference SOC for discharging operation (S220) may be set to 0%. In this case, when the control unit 120 reaches a full discharging state in which the SOC of the battery becomes 0%, the control unit 120 may terminate the discharging operation and allow the rest operation (S230) to be performed.

In the rest operation (S230), the reference time is the minimum time during which both charging and discharging of the battery are maintained stopped, and may be stored in advance in the storage unit 130, etc. In particular, the rest time may be set to a time length of 1 hour or more. Preferably, the rest time may be set to a time length of 10 hours or more. Moreover, the rest time may be set to a time length of 20 hours or more. According to the above embodiment, the proportions of sulfur-containing chemical species can be appropriately redistributed by providing a sufficiently long rest period.

With reference to the drawings, the operation of the control unit 120 to perform a capacity recovery process based on the electric state of the battery will be described in more detail.

The control unit 120 may monitor the usage history of the battery based on the time series of each battery parameter collected from the sensing unit 110. The usage history of the battery may include the number of charging-discharging cycles and/or the accumulated discharging capacity.

Meanwhile, the degradation of the battery is naturally due to an increase in at least one of the number of charging-discharging cycles and the accumulated discharging capacity of the battery. Therefore, the number of charging-discharging cycles or the accumulated discharging capacity of the battery can be used as an indicator of the degradation state of the battery. In this way, the control unit 120 may monitor the electric state of the battery in real time based on the time series of at least one type of battery parameter collected from the sensing unit 110 and perform a capacity recovery process based on the monitored electric state. Below, it will be described in detail how the control unit 120 performs the above-described capacity recovery process based on the usage history of the battery.

Specifically, the control unit 120 may determine the accumulated discharging capacity of the battery for an arbitrary period based on the time series data of at least one battery parameter collected from the sensing unit 110. As an example, the sensing unit 110 may include a current sensor. The control unit 120 may periodically collect a current signal representing the current detected by the sensing unit 110 and record time series data of the current as a battery parameter in the storage unit 130. Additionally, the control unit 120 may be configured to determine the accumulated discharging capacity over an arbitrary period from the time series data of the current.

For example, the sensing unit 110 may output a current signal representing the current detected during a predetermined time or the number of charging-discharging cycles (or during a predetermined section) to the control unit 120, and the control unit 120 may recognize the accumulated discharging capacity by integrating the current value indicated by the current signal.

Since the degree of degradation of the battery is insignificant in the BOL (Beginning Of Life) state where the battery can be regarded as a new product, the control unit 120 does not need to perform a capacity recovery process for the battery. Additionally, since the battery may be degraded by the capacity recovery process itself, it is recommended to avoid frequent application of the capacity recovery process. Therefore, the control unit 120 first determines whether application of the capacity recovery process to the battery is necessary based on the accumulated discharging capacity from a specific time point in the past, thereby allowing the capacity recovery process to be applied at the optimal time point and improving the capacity recovery effect by the capacity recovery process. For example, the control unit 120 may determine the accumulated discharging capacity of the battery from the completion time point of the previous capacity recovery process to the current time point, and estimate the degree of degradation of the battery in the same period based on the accumulated discharging capacity.

Specifically, the control unit 120 may compare the number of total charging-discharging cycles of the battery with the plurality of cycle sections to determine to which cycle section of the plurality of cycle sections the number of total charging-discharging cycles at the present belongs. For reference, whenever the total accumulated discharging capacity from the shipping time point of the battery increases by the design capacity of the battery, the number of charging-discharging cycles of the battery may be counted up by 1. The control unit 120 may calculate the accumulated discharging capacity of the battery in each cycle section.

The control unit 120 may calculate the accumulated discharging capacity of the battery for each cycle section. For example, if the number of total charging-discharging cycles of the battery belongs to the first cycle section among the plurality of cycle sections, the control unit 120 may determine the accumulated discharging capacity of the battery in the first cycle section. Assuming that x is the number of cycle sections and y is a natural number less than x, the size of the (y+1)^{th} cycle section may be less than or equal to the size of the y^{th} cycle section. For example, the first cycle section may be a section in which the number of total charging-discharging cycles is 0 to 100, and the second cycle section may be a section in which the number of total charging-discharging cycles is 101 to 190.

The electric state of the battery at a specific time point may include the total accumulated discharging capacity from the shipping time point of the battery to the specific time point. The control unit 120 may be configured to perform a capacity recovery process whenever the electric state of the battery satisfies a predetermined set of conditions.

Even after the capacity recovery process is performed on the battery once, the capacity of the battery may be degraded again as the battery is used. Therefore, the control unit 120 may perform the capacity recovery process conditionally based the set of conditions, which include at least one of (i) the increase amount of the total accumulated discharging capacity is greater than or equal to the reference capacity, and (ii) the increase amount of the accumulated discharging capacity from the completion time point of the previous capacity recovery process is greater than or equal to the reference capacity. Through the capacity recovery process that is performed repeatedly, the control unit 120 may recover the available energy of the battery.

The reference capacity may be predetermined to be equal to the value obtained by multiplying the design capacity by a predetermined reference value. The design capacity may be a predetermined value as the full charge capacity of the battery at the shipping time point. The reference capacity may be, for example, determined within a range of 1 to 200 times the design capacity. Preferably, the reference capacity may be preset to be 5 to 70 times the design capacity. More preferably, the reference capacity may be preset to be 10 to 20 times the design capacity. According to the above embodiment, as the reference capacity is set to be equal to a predetermined multiple of the design capacity, the degradation state of the battery can be more easily estimated. Accordingly, the control unit 120 may easily determine whether or not to perform the above-described capacity recovery process depending on whether the electric state of the battery satisfies the condition set.

Alternatively, the control unit 120 may set a reference capacity to be compared with the accumulated discharging capacity from the completion time point of the previous capacity recovery process to the current time point to perform the capacity recovery process again. The control unit 120 may optimize the timing at which the capacity recovery process is performed again according to the total accumulated discharging capacity corresponding to the electric state of the battery.

Specifically, the control unit 120 may set the reference capacity, which is the standard for performing the capacity recovery process, to a relatively larger value if the electric state of the battery is close to the BOL state, and set the reference capacity related to the capacity recovery process to be performed later to a relatively smaller value. For example, the control unit 120 may be configured to perform a first capacity recovery process and a second capacity recovery process for the battery. The control unit 120 may set the first reference capacity for determining whether to perform the first capacity recovery process and the second reference capacity for determining whether to perform the second capacity recovery process to be different from each other.

The control unit 120 may set the reference capacity for determining whether to perform the capacity recovery process to at least two different values according to the number of rounds of the capacity recovery process. For example, the control unit 120 may set the reference capacity for determining whether to perform the first capacity recovery process on the battery after shipping to a value corresponding to 66 times the design capacity of the battery. In this case, when the design capacity of the battery is 0.22 Ah, the reference capacity is 14.52 Ah, so the control unit 120 may judge that it is necessary to perform the first capacity recovery process, in response to the total accumulated discharging capacity of the battery from the shipping time point being 14.52 Ah or more. The reference capacity associated with the second capacity recovery process may be 14 times the design capacity, which is less than the reference capacity associated with the first capacity recovery process. In this case, the control unit 120 may determine that it is necessary to perform the second capacity recovery process in which the accumulated discharging capacity from the completion time point of the first capacity recovery process is 3.08 Ah or more, which is 14 times the design capacity. When w is a natural number of 2 or more representing the number of rounds of the capacity recovery process, the reference capacity associated with the w^{th} capacity recovery process may be predetermined to be less than or equal to the reference capacity associated with the (w-1)^{th} capacity recovery process.

The control unit 120 may compare the accumulated discharging capacity from the completion time point of the (w-1)^{th} capacity recovery process with the reference capacity associated with the w^{th} capacity recovery process. The control unit 120 may determine that it is necessary to perform the w^{th} capacity recovery process when the accumulated discharging capacity from the completion time point of the (w-1)^{th} capacity recovery process is greater than or equal to the reference capacity associated with the w^{th} capacity recovery process. In a state where it is necessary to perform the w^{th} capacity recovery process, in response to the electric state of the battery switching from a charging state or a discharging state to a rest state, the control unit 120 may initiate the capacity recovery process.

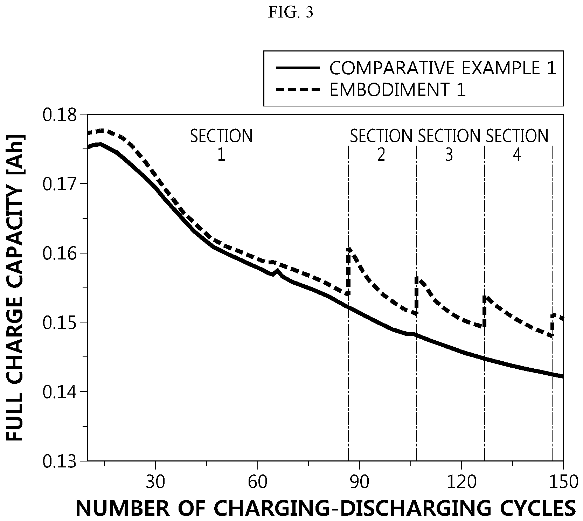

FIG. 3 is a graph referenced to explain the difference in battery life characteristics depending on whether or not the capacity recovery process according to one embodiment of the present disclosure is applied.

In the graph of FIG. 3, the x-axis represents the number of charging-discharging cycles of the battery, the y-axis represents full charge capacity, and the unit of full charge capacity is Ah (Ampere hour). The charging-discharging cycle may include a charging procedure that charges the battery from 1.8 V to 2.5 V with a constant current of 0.3 C and a discharging procedure that discharges the battery from 2.5 V to 1.8 V with a constant current of 2.0 C. A predetermined rest time may be granted between the discharging procedure of the preceding charging-discharging cycle and the charging procedure of the succeeding charging-discharging cycle. The full charge capacity associated with a specific charging-discharging cycle may be one of or the average of both of the charging capacity by the charging procedure and the discharging capacity by the discharging procedure of the corresponding charging-discharging cycle.

Each of the plurality of cycle sections (Section 1 to Section 4) shown as an example in FIG. 3 has a predetermined size. Section 1 is a section where the number of charging-discharging cycles is 87 or less, and its size is 87. Section 2 is a section where the number of charging-discharging cycles is 88 to 107, and its size is 20. Section 3 is a section where the number of charging-discharging cycles is 108 to 127, and its size is 20. Section 4 is a section where the number of charging-discharging cycles is 128 to 147, and its size is 20.

The control unit 120 may calculate the accumulated discharging capacity in each of the plurality of cycle sections and determine whether the accumulated discharging capacity in a specific cycle section is greater than or equal to the reference capacity associated with the corresponding specific cycle section. In order to calculate the accumulated discharging capacity for each cycle section, the control unit 120 may initialize the accumulated discharging capacity in the corresponding specific cycle section to 0 Ah when the capacity recovery process is completed in the specific cycle section.

Specifically, the control unit 120 may initialize the accumulated discharging capacity when the capacity recovery process is completed in the preceding cycle section among two adjacent cycle sections and calculate the accumulated discharging capacity from the initialization time point. For example, the control unit 120 performs the first capacity recovery process when the number of total charging-discharging cycles of the battery reaches the upper limit cycle number of Section 1 (the number of charging-discharging cycles = 87). Next, the control unit 120 may monitor whether the accumulated discharging capacity from when the number of total charging-discharging cycles of the battery is equal to the lower limit cycle number of Section 2 (the number of charging-discharging cycles = 88) reaches 3.08 Ah, which is the reference capacity. The control unit 120 may perform the second capacity recovery process under the condition that the accumulated discharging capacity is more than or equal to the reference capacity of 3.08 Ah and the number of total charging-discharging cycles reaches the upper limit cycle number of Section 2 (the number of charging-discharging cycles = 107). The control unit 120 may monitor whether the accumulated discharging capacity from when the number of total charging-discharging cycles of the battery is equal to the lower limit cycle number of Section 3 (the number of charging-discharging cycles = 108) reaches the reference capacity of 3.08 Ah. The control unit 120 may perform the third capacity recovery process under the condition the accumulated discharging capacity is more than or equal to the reference capacity of 3.08 Ah and the number of total charging-discharging cycles reaches the upper limit cycle number of Section 3 (the number of charging-discharging cycles = 127). Afterwards, the control unit 120 may monitor whether the accumulated discharging capacity from when the number of total charging-discharging cycles of the battery is equal to the lower limit cycle number of Section 4 (the number of charging-discharging cycles = 128) reaches 3.08 Ah, which is the reference capacity. The control unit 120 may perform the fourth capacity recovery process under the condition that the accumulated discharging capacity is more than or equal to the reference capacity of 3.08 Ah and the number of total charging-discharging cycles reaches the upper limit cycle number of Section 4 (the number of charging-discharging cycles = 147).

In this way, the control unit 120 may accurately recognize the execution time point of the next capacity recovery process by initializing the accumulated discharging capacity each time the capacity recovery process is performed. Below, it will be explained that the control unit 120 performs the above-described capacity recovery protocol based on the number of charging-discharging cycles of the battery.

The control unit 120 may recognize the number of total charging-discharging cycles of the battery based on the total accumulated discharging capacity from the shipping time point. As an example, the sensing unit 110 may recognize the number of charging-discharging cycles (or charging-discharging cycle) of the battery, in which one charging and one discharging is considered as one cycle for the battery. The control unit 120 may recognize whether the number of total charging-discharging cycles or the increase amount of the number of total charging-discharging cycles from a specific time point reaches a predetermined reference cycle number. The control unit 120 may determine that it is necessary to apply a capacity recovery process for the battery in response to the number of total charging-discharging cycles or the increase amount of the number of total charging-discharging cycles from a specific time point being greater than or equal to a predetermined reference cycle number.

The control unit 120 may determine that it is necessary to perform a capacity recovery process when the number of total charging-discharging cycles of the battery reaches a predetermined reference cycle number. The control unit 120 may determine that it is necessary to perform the capacity recovery process when the increase amount of the number of total charging-discharging cycles from the completion time point of the previous capacity recovery process reaches a predetermined number of reference cycles. In other words, the capacity recovery process may be applied repeatedly with time difference according to the electric state that changes throughout the entire life of the battery.

The control unit 120 may determine that it is necessary to recover capacity of the battery when the number of total charging-discharging cycles of the battery reaches the number of reference cycles in a preset reference cycle list. The reference cycle list may be a data table in which different reference cycle numbers (e.g., 100, 120, 140, 160, 170) are recorded.

The control unit 120 may adaptively control the timing at which the capacity recovery process is performed according to the electric state of the battery. In other words, as the electric state of the battery is closer to the BOL state, the degree of degradation can be lower. The control unit 120 may determine a time point at which the capacity recovery process will be performed again according to the number of total charging-discharging cycles of the battery.

Specifically, the control unit 120 may shorten the time interval between the capacity recovery processes (i.e., the time difference between the completion time point of the previous capacity recovery process and the start time point of the new capacity recovery process) by reducing the number of reference cycles used to determine the need to perform a capacity recovery process as the battery degrades from the BOL state.

The control unit 120 may set at least two different reference cycle numbers to repeatedly perform the capacity recovery process according to the battery degradation situation. For example, the control unit 120 may perform the first capacity recovery process when the number of total charging-discharging cycles of the battery reaches 87 (the upper limit cycle number of Section 1), and then perform a new capacity recovery process every time the number of total charging-discharging cycles increases by 20.

The control unit 120 may be configured to change the performance cycle of the capacity recovery process. Specifically, as the battery is used, the degradation rate may gradually accelerate. For example, the degree of battery degradation by the same number of charging-discharging cycles is greater when the battery is in the MOL state than when the battery is in the BOL state, and is greater when the battery is in the EOL (End Of Life) state than when the battery is in the MOL (Middle Of Life) state. Accordingly, the control unit 120 may set the execution period of the capacity recovery process to be gradually shorter as the battery deteriorates.

For example, the control unit 120 may perform the first capacity recovery process when the number of total charging-discharging cycles is equal to 87, and perform the capacity recovery process again whenever the number of total charging-discharging cycles increases by 20 until the total number of execution times of the capacity recovery process reaches the first threshold number (e.g., 10). Afterwards, the control unit 120 may perform the capacity recovery process again every time the number of total charging-discharging cycles increases by 10 until the total number of execution times of the capacity recovery process reaches the second threshold number (e.g., 30). According to this embodiment, as degradation of the battery accelerates, the capacity recovery effect of the battery may be maximized by shortening the re-performance cycle of the capacity recovery process.

Hereinafter, in order to more clearly explain the effect of battery charging and discharging control according to the embodiment of the present disclosure, it will be described in more detail using embodiments and comparative examples. However, the embodiment according to the present disclosure may be modified into various other forms, and the scope of the present disclosure should not be construed as being limited to the embodiment described in detail below. Embodiments of the present disclosure are provided to more fully explain the present disclosure to those with average knowledge in the art.

Referring to FIG. 3, a graph showing the relationship between the full charge capacity and the number of charging-discharging cycles of the battery according to the embodiment 1 of the present disclosure, and a graph showing the relationship between the full charge capacity and the number of charging-discharging cycles of the battery according to the comparative example 1 may be seen.

### [Comparative Example 1]

For the battery, the charging-discharging cycle, in which (1) the charging procedure, (2) the discharging procedure, and (3) the rest procedure defined as follows were sequentially executed, was repeatedly performed.
1) Charging procedure: charge with a constant current of 0.3 C until the voltage of the battery rises from 1.8 V to 2.5 V (or from SOC 0% to 100%)
2) Discharging procedure: discharge with a constant current of 2.0 C until the voltage of the battery drops from 2.5 V to 1.8 V (or from SOC 100% to 0%)
3) Rest procedure: stop charging and discharging for 1 minute

### [Embodiment 1]

A battery of the same type and specifications as the comparative example 1 was prepared, and the charging-discharging cycle common to the comparative example 1 was repeatedly performed. The difference from the comparative example 1 is that the capacity recovery process in which the first rest procedure according to 3-1) is replaced by the second rest procedure according to 3-2) was performed a total of 4 times under the condition that the number of total charging-discharging cycles reaches 87, 107, 127, and 147, respectively.
1) Charging procedure: charge with a constant current of 0.3 C until the voltage of the battery rises from 1.8 V to 2.5 V (or from SOC 0% to 100%)
2) Discharging procedure: discharge with a constant current of 2.0 C until the voltage of the battery drops from 2.5 V to 1.8 V (or from SOC 100% to 0%)
3-1) First rest procedure: stop charging and discharging for 1 minute
3-2) Second rest procedure: stop charging and discharging for 20 hours

That is, in the embodiment 1, the first capacity recovery process is the 88^{th} charging-discharging cycle, the second capacity recovery process is the 108^{th} charging-discharging cycle, the third capacity recovery process is the 128^{th} charging-discharging cycle, and the fourth capacity recovery process is the 148^{th} charging-discharging cycle.

The charging-discharging cycle as a total of four capacity recovery processes applied to the battery according to the embodiment 1 includes 1) the charging procedure, 2) the discharging procedure, and 3-2) the second rest procedure, unlike the comparative example 1.

Referring to FIG. 3, in Section 1 where the capacity recovery process has not been performed, the change in full charge capacity according to the embodiment 1 is almost the same as the change in full charge capacity according to the comparative example 1.

On the other hand, as the capacity of the battery according to the embodiment 1 is recovered by the first capacity recovery process corresponding to the lower limit cycle number of 88 in Section 2, the full charge capacity of the battery according to the embodiment 1 is much higher than the full charge capacity of the battery according to the comparative example 1 over the entire range of Section 2.

Likewise, as the capacity of the battery degraded in Section 2 is partially recovered by the second capacity recovery process corresponding to the lower limit cycle number of 108 in Section 3, the full charge capacity of the battery according to the embodiment 1 is much higher than the full charge capacity of the battery according to the comparative example 1 over the entire range of Section 3. In each of Section 3 and Section 4, it can be confirmed that the full charge capacity of the battery of the embodiment 1 is maintained higher than that of the battery according to the comparative example 1 as an effect of capacity recovery by the third capacity recovery process and the fourth capacity recovery process. In other words, it can be said that the battery capacity recovery apparatus 100 according to the present disclosure can improve the lifespan characteristics of the battery by repeatedly performing the capacity recovery process for the battery at appropriate intervals.

Below, with reference to Table 1 and Table 2, the capacity recovery effect by a total of four capacity recovery processes will be described in detail. Table 1 shows the increase rate of full charge capacity before and after each of a total of four capacity recovery processes is applied to the battery according to the embodiment 1. The increase rate of full charge capacity may also be referred to as 'capacity recovery rate'. For example, when the full charge capacity increases from A to B through the capacity recovery process, recovered capacity = B-A, and capacity recovery rate = (B-A)/A*100%.

**[Table 1]**

| Number of charging-discharging cycles | 87→88 | 107→108 | 127→128 | 147→148 |
|---|---|---|---|---|
| Capacity increase rate | +3.76% | +3.76% | +3.76% | +3.76% |

According to Table 1, as a result of performing the first capacity recovery process at the number of charging-discharging cycles of 88, capacity recovery of about 3.76% was achieved compared to the full charge capacity at the number of charging-discharging cycles of 87. In addition, the full charge capacity immediately after the second capacity recovery process was performed at the number of charging-discharging cycles of 108 increased by about 3.16% compared to the full charge capacity at the number of charging-discharging cycles of 107. Additionally, the full charge capacity immediately after the third capacity recovery process was performed at the number of charging-discharging cycles of 128 increased by about 2.81% compared to the full charge capacity at the number of charging-discharging cycles of 127. Additionally, the full charge capacity immediately after the fourth capacity recovery process was performed at the number of charging-discharging cycles of 148 increased by about 1.95% compared to the full charge capacity at the number of charging-discharging cycles of 147. According to the experimental results of the embodiment 1, it can be seen that each time the capacity recovery process is performed, the battery capacity is partially recovered and the discharging capacity increases.

Additionally, the increased available capacity is not only effective in the corresponding charging-discharging cycle, but may also be maintained in subsequent charging-discharging cycles. This can also be understood from the results of measuring the full charge capacity of the battery according to the comparative example 1 and the full charge capacity of the battery according to the embodiment 1 as the charging-discharging cycle progresses.

Table 2 below summarizes the comparison results between the battery life characteristics according to the embodiment 1 and the battery life characteristics according to the comparative example 1.

**[Table 2]**

| Number of charging-discharging cycles | 87 | 88 to 107 (Section 2) | 107 | 108 to 127 (section 3) | 127 | 128 to 147 (Section 4) |
|---|---|---|---|---|---|---|
| Embodiment 1 | 0.154 | 0.155 | 0.151 | 0.152 | 0.150 | 0.151 |
| Comparative Example 1 | 0.153 | 0.150 | 0.148 | 0.146 | 0.145 | 0.144 |

In Table 2, the number in each cell represents full charge capacity. Referring to Table 2, according to the embodiment 1, the full charge capacity in the 87^{th} charging-discharging cycle before the first capacity recovery process is applied is 0.154 Ah, and the average full charge capacity in Section 2 (88^{th} to 107^{th} charging-discharging cycles) is confirmed to be 0.155 Ah. In addition, according to the embodiment 1, the full charge capacity in the 107^{th} charging-discharging cycle before the second capacity recovery process is applied is 0.151 Ah, and the average full charge capacity in Section 3 (108^{th} to 127^{th} charging-discharging cycles) is confirmed to be 0.152 Ah. In addition, according to the embodiment 1, the full charge capacity in the 127^{th} charging-discharging cycle before the third capacity recovery process is applied is 0.150 Ah, and the average full charge capacity in Section 4 (128^{th} to 147^{th} charging-discharging cycles) is confirmed to be 0.151 Ah.

In comparison, according to the comparative example 1, where the capacity recovery process was never applied, as the charging-discharging cycle continued, only a continuous decrease in full charge capacity was observed as 0.153 Ah (full charge capacity in the 87^{th} charging-discharging cycle), 0.150 Ah (average full charge capacity in Section 2), 0.148 Ah (full charge capacity in the 107^{th} charging-discharging cycle), 0.146 Ah (average full charge capacity in Section 3), 0.145 Ah (full charge capacity in the 127^{th} charging-discharging cycle), and 0.144 Ah (average full charge capacity in Section 3).

Based on the same charging-discharging cycle and the same cycle section, it can be seen that the full charge capacity of the battery according to the embodiment 1 is larger than the full charge capacity of the battery according to the comparative example 1.

In addition, considering that the average full charge capacity in a specific cycle section during the charging-discharging cycle (during a predetermined section) is greater than the average full charge capacity of the battery according to the comparative example 1, the capacity recovery effect by the capacity recovery process is not temporary but lasts for a long time, which can also be confirmed through the graph in FIG. 3. Therefore, the effect of slowing down the rate of battery degradation by the amount of capacity recovery can also be provided.

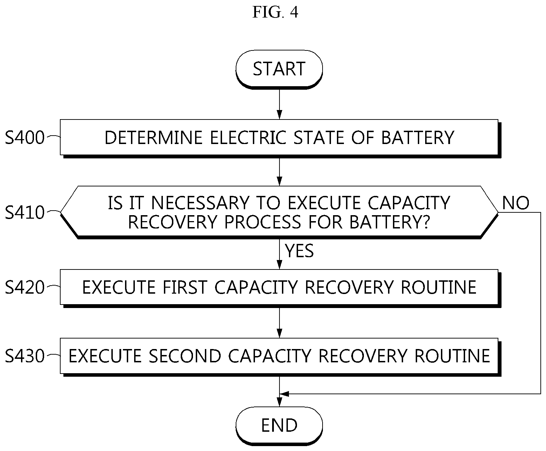

FIG. 4 is a flow chart schematically showing the battery capacity recovery method according to the second embodiment of the present disclosure. The method of FIG. 4 may be provided to be performed by the battery capacity recovery apparatus 100 shown in FIG. 1.

Referring to FIG. 4, in step S400, the control unit 120 determines the electric state of the battery.

In step S410, the control unit 120 determines whether or not to execute a capacity recovery process for the battery based on the electric state of the battery. If the value of step S410 is "Yes", the process proceeds to step S420. If the value of step S410 is "No", the method according to FIG. 4 can be ended. Unlike the method according to FIG. 2, the capacity recovery process according to the method of FIG. 4 includes a first capacity recovery routine and a second capacity recovery routine.

Specifically, the control unit 120 may determine whether the electric state of the battery satisfies all conditions of a predetermined condition set, and if so, determine to execute a capacity recovery process for the battery.

The condition set used in step S410 includes at least one condition selected from the following condition list.

### <Condition list>

(i) The accumulated discharging capacity from the completion time point of the previous capacity recovery process is greater than or equal to the reference capacity
(ii) The decrease amount of the full charge capacity from the completion time point of the previous capacity recovery process is greater than or equal to the threshold capacity (e.g., 1% of design capacity)
(iii) The battery is at rest (no load state)

In step S420, the control unit 120 executes the first capacity recovery routine. The first capacity recovery routine may be a procedure that discharges the battery until the SOC of the battery degrades to the reference SOC. The control unit 120 may transmit a discharging command to the discharging device to discharge the battery at a reference constant current with a predetermined current rate (e.g., 2.0 C). As a discharging device, the inverter 30 provided in the electric vehicle 1 can be used.

While executing step S420, the control unit 120 may check whether the first capacity recovery routine has been completed by periodically or aperiodically monitoring the SOC of the battery. In the battery capacity recovery method according to the second embodiment, the reference SOC may be predetermined. As an example, the reference SOC may be a fixed value within a range of 0% to 20%.

In step S430, the control unit 120 executes the second capacity recovery routine. The second capacity recovery routine may be a procedure that allows the battery to rest during the reference time or more from the completion time point of the first capacity recovery routine. The control unit 120 may control a relay provided in the battery pack to be in an off state or transmit a drive stop command to the discharging device so that the battery is maintained in an unloaded state.

In the battery capacity recovery method according to the second embodiment, the reference time may be predetermined. As an example, the reference time may be a fixed value of 10 hours or more.

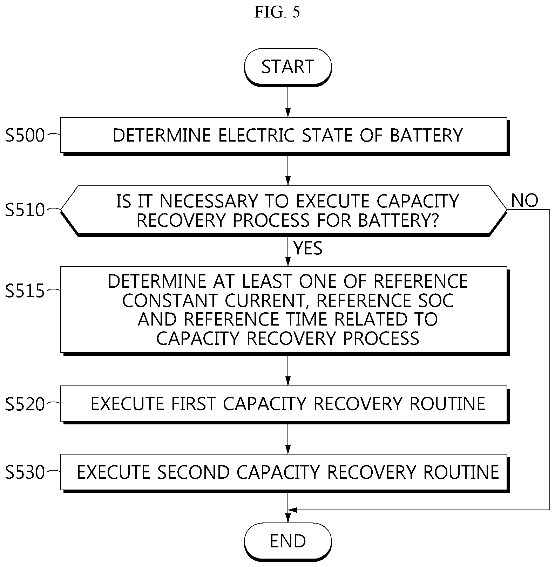

FIG. 5 is a flow chart schematically showing the battery capacity recovery method according to the third embodiment of the present disclosure. The method of FIG. 5 may be provided to be performed by the battery capacity recovery apparatus 100 shown in FIG. 1. In explaining the method according to FIG. 5, it should be noted in advance that repeated descriptions of content common to the method according to FIG. 4 may be omitted.

Referring to FIG. 5, in step S500, the control unit 120 determines the electric state of the battery.

In step S510, the control unit 120 determines whether or not to execute a capacity recovery process for the battery based on the electric state of the battery. If the value of step S510 is "Yes", the process proceeds to step S515. If the value of step S510 is "No", the method according to FIG. 5 may be ended. Like the capacity recovery process according to the method of FIG. 4, the capacity recovery process according to the method of FIG. 5 includes a first capacity recovery routine and a second capacity recovery routine.

In step S515, the control unit 120 determines at least one of the reference constant current, the reference SOC, and the reference time related to the capacity recovery process. That is, in contrast to step S420 of the method according to FIG. 4, at least one of the reference constant current, the reference SOC, and the reference time may be a variable control parameter that is adaptively changed by the control unit 120 based on the electric state of the battery, etc. If only one or two control parameters among the reference constant current, the reference SOC, and the reference time are determined in step S515, each of the remaining control parameters may be set to a predetermined value.

The storage unit 130 may store at least one of the first relationship data, the second relationship data, and the third relationship data. The first relationship data, the second relationship data, and the third relationship data may each be recorded in the storage unit 130 in the form of a look-up table or polinomial function.

The first relationship data is used to determine the reference constant current, and may define a predetermined positive corresponding relationship between the full charge capacity and the reference constant current. According to the first relationship data, as the full charge capacity decreases, the reference constant current also decreases. The control unit may determine the reference constant current as the operating condition of the first capacity recovery routine to be executed soon by inputting the current full charge capacity of the battery as an index into the first relationship data.

The second relationship data is used to determine the reference SOC and may be a predetermined positive corresponding relationship between the full charge capacity and the reference SOC. According to the second relationship data, as the full charge capacity decreases, the reference SOC decreases. The control unit may determine the reference SOC as the termination condition of the first capacity recovery routine to be executed soon by inputting the current full charge capacity of the battery as an index into the second relationship data.

The third relationship data is used to determine the reference time, and may be a predetermined negative corresponding relationship between the full charge capacity and the reference time. According to the third relationship data, as the full charge capacity decreases, the reference time increases. The control unit may determine the reference time as the minimum duration time of the second capacity recovery routine to be executed soon by inputting the current full charge capacity of the battery as an index into the third relationship data.

In step S520, the control unit 120 executes the first capacity recovery routine. The first capacity recovery routine may be a procedure that discharges the battery with the reference constant current determined in step S515 until the SOC of the battery decreases to the reference SOC determined in step S515.

In step S530, the control unit 120 executes the second capacity recovery routine. The second capacity recovery routine may be a procedure that allows the battery to rest during the reference time determined in step S515 or more from the completion time point of the first capacity recovery routine.

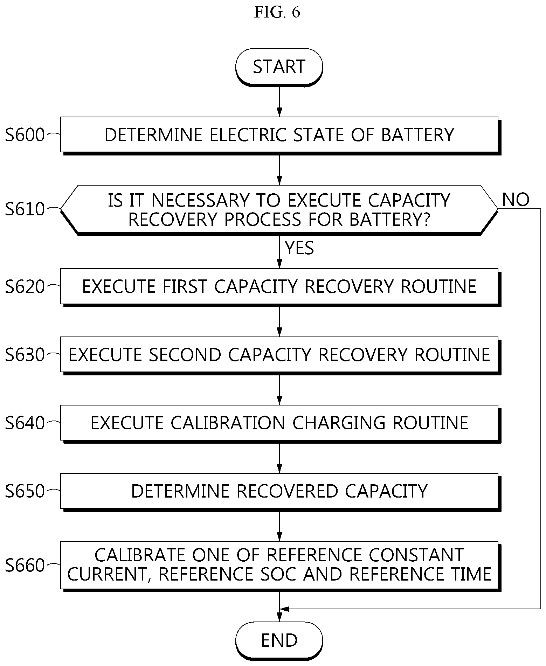

FIG. 6 is a flow chart schematically showing the battery capacity recovery method according to the fourth embodiment of the present disclosure. The method of FIG. 6 may be provided to be performed by the battery capacity recovery apparatus 100 shown in FIG. 1. When explaining the method according to FIG. 6, it should be noted in advance that repeated descriptions of content common to the method according to FIG. 4 or FIG. 5 may be omitted.

Referring to FIG. 6, in step S600, the control unit 120 determines the electric state of the battery.

In step S610, the control unit 120 determines whether or not to execute a capacity recovery process for the battery based on the electric state of the battery. If the value of step S610 is "Yes", the process proceeds to step S612. If the value of step S610 is "No", the method according to FIG. 6 can be ended. Unlike the capacity recovery process according to the method of FIGS. 2 and 5, the capacity recovery process according to the method of FIG. 6 further includes a calibration charging routine following the second capacity recovery routine.

In step S620, the control unit 120 executes the first capacity recovery routine. The first capacity recovery routine may be a procedure that discharges the battery with a reference constant current until the SOC of the battery degrades to the reference SOC.

In step S630, the control unit 120 executes the second capacity recovery routine. The second capacity recovery routine may be a procedure that allows the battery to rest during the reference time or more from the completion time point of the first capacity recovery routine.

In step S640, the control unit 120 executes the calibration charging routine. The calibration charging routine may be initiated under the condition that the rest time of the battery by the second capacity recovery routine is greater than or equal to the reference time. The calibration charging routine may be a procedure that charges the battery until the SOC of the battery reaches the verification SOC. The verification SOC is larger than the reference SOC and may be predetermined in the range of 80 to 100%, for example.

In step S650, the control unit 120 determines a recovered capacity by the capacity recovery process based on the integration amount of the charging current and the SOC change amount (e.g., the difference between the verification SOC and the reference SOC) over the execution period of the calibration charging routine. Specifically, the control unit 120 may determine the current full charge capacity to be equal to the value obtained by dividing the integration amount of the charging current by the SOC change amount, and then determine the recovered capacity to be equal to the value obtained by subtracting the full charge capacity at the start of the method of FIG. 6 from the current full charge capacity.

In step S660, the control unit 120 calibrates one of the reference constant current, the reference SOC, and the reference time based on the recovered capacity.

The storage unit 130 may store at least one of the first correction data, the second correction data, and the third correction data. The first correction data, the second correction data, and the third correction data may each be recorded in the storage unit 130 in the form of a look-up table or polynomial function.

The first correction data is used to calibrate the reference constant current, and may define a predetermined positive corresponding relationship between the recovered capacity and the correction amount for the reference constant current. Therefore, as the recovered capacity larger, the reference constant current is calibrated to be larger.

The second correction data is used to calibrate the reference SOC, and may define a predetermined positive corresponding relationship between the recovered capacity and the correction amount for the reference SOC. Therefore, as the recovered capacity larger, the reference SOC is calibrated to be larger.

The third correction data is used to calibrate the reference time, and may define a predetermined negative corresponding relationship between the recovered capacity and the correction amount for the reference time. Therefore, as the recovered capacity larger, the reference time is calibrated to be shorter.

Any one of the reference constant current, the reference SOC, and the reference time calibrated through step S660 will be used when the capacity recovery process is executed again later.

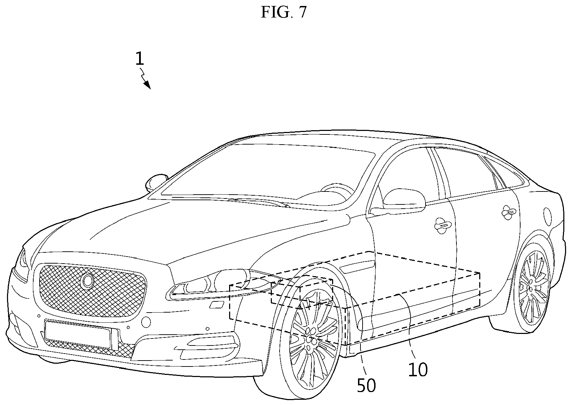

FIG. 7 is a drawing showing the appearance of an electric vehicle according to the present disclosure, and FIG. 8 is a diagram schematically showing the configuration of the electric vehicle shown in FIG. 7.

Referring to FIGS. 7 and 8, the electric vehicle 1 includes a vehicle controller 2, a battery pack 10, a relay 20, an inverter 30, and an electric motor 40. The charging and discharging terminals P+, P- of the battery pack 10 can be electrically connected to the charger 3 through a charging cable, etc. The charger 3 may be included in the electric vehicle 1 or may be provided at the charging station.

The vehicle controller 2 (e.g., ECU: Electronic Control Unit) is configured to transmit a key-on signal to the battery management system 50 in response to the start button (not shown) provided in the electric vehicle 1 being switched to the ON position by the user. The vehicle controller 2 is configured to transmit a key-off signal to the battery management system 50 in response to the start button being switched to the OFF position by the user. The charger 3 can communicate with the vehicle controller 2 and supply constant-current or constant-voltage charging power through the charging and discharging terminals P+, P- of the battery pack 10.

The battery pack 10 includes a battery B and a battery management system 50.

The type of battery B is not particularly limited as long as it includes an electrochemical element capable of repeated charging and discharging, such as a lithium-ion cell. The battery B is subject to the capacity recovery process according to the embodiments described above with reference to FIGS. 1 to 6.

The relay 20 is electrically connected in series to the battery B through a power path that connects the battery B and the inverter 30. In FIG. 1, the relay 20 is illustrated as connected between the positive terminal of the battery B and the charging and discharging terminals P+. The relay 20 is controlled to turn on and off in response to a switching signal from the battery management system 50. The relay 20 may be a mechanical contactor turned on and off by the magnetic force of the coil, or a semiconductor switch such as a MOSFET (Metal Oxide Semiconductor Field Effect transistor). While the relay 20 is turned off or the inverter 30 and the charger 3 are stopped, the battery B is maintained in a rest state.

The inverter 30 is provided to convert DC current from the battery B into AC current in response to commands from the battery management system 50 or the vehicle controller 2.

The electric motor 40 is driven using AC power from the inverter 30. As the electric motor 40, for example, a 3-phase AC motor 40 can be used.

The battery management system 50 includes a sensing unit 110, a control unit 120, and a storage unit 130. The battery management system 50 may further include a communication circuit 150. The battery management system 50 may be used as the battery capacity recovery apparatus 100 shown in FIG. 1.

The sensing unit 110 may include a voltage detection unit 111 and a current detection unit 113.

The voltage detection unit 111 is connected to the positive electrode terminal and the negative electrode terminal of the battery B to detect the terminal voltage, which is the voltage across both ends of the battery B, and is configured to output a voltage signal SV indicating the detected terminal voltage to the control unit 120.

The current detection unit 113 is connected in series to the battery B through the current path between the battery B and the inverter 30. The current detection unit 113 is configured to detect charging and discharging current, which is the current flowing through the battery B, and output a current signal SI indicating the detected charging and discharging current to the control unit 120. The current detection unit 113 may be implemented with one or a combination of two or more of known current detection elements such as, for example, a shunt resistor and a Hall effect element.

The communication circuit 150 is configured to support wired or wireless communication between the control unit 120 and the vehicle controller 2. Wired communication may be, for example, CAN (Controller Area Network) communication, and wireless communication may be, for example, ZigBee or Bluetooth communication. Of course, the type of communication protocol is not particularly limited as long as it supports wired and wireless communication between the control unit 120 and the vehicle controller 2. The communication circuit 150 may include an output device (e.g., display, speaker) that provides information received from the control unit 120 and/or the vehicle controller 2 in a form recognizable to the user.

The control unit 120 is operably coupled to the relay 20, the voltage detection unit 111, the current detection unit 113, and the communication circuit 150. The operational combination of two components means that the two components are connected directly or indirectly to enable transmission and reception of signals in one direction or both directions.

The control unit 120 may collect a voltage signal from the voltage detection unit 111 and a current signal from the current detection unit 113. The control unit 120 may convert and record each analog signal collected from the sensing unit 110 into digital values using an ADC (Analog to Digital Converter) provided therein.

The control unit 120 may be referred to as a `control circuit' or a `battery controller', and in terms of hardware, it may be implemented using at least one of ASICs (application specific integrated circuits), DSPs (digital signal processors), DSPDs (digital signal processing devices), PLDs (programmable logic devices), FPGAs (field programmable gate arrays), microprocessors, and other electrical units to perform functions.

The storage unit 130 may include at least one type of storage medium selected from, for example, flash memory type, hard disk type, SSD (Solid State Disk) type, SDD (Silicon Disk Drive) type, multimedia card micro type, RAM (random access memory), SRAM (static random access memory), ROM (read-only memory), EEPROM (electrically erasable programmable read-only memory), or PROM (programmable read-only memory). The storage unit 130 can store data and programs required for calculation operations by the control unit 120. The storage unit 130 can store data representing the result of an operation performed by the control unit 120. In FIG. 1, the storage unit 130 is shown as being physically independent from the control unit 120, but it may also be built in the control unit 120.

The control unit 120 may turn on the relay 20 in response to the key-on signal. The control unit 120 may turn off the relay 20 in response to the key-off signal. The key-off signal indicates a transition from a cycle mode to a rest mode. Alternatively, the vehicle controller 2 may be responsible for on-off control of the relay 20 instead of the control unit 120.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

## Claims

1. A battery capacity recovery apparatus, comprising:
a sensing unit configured to measure voltage and current of a battery; and
a control unit configured to determine an electric state of the battery based on time series data of each of the voltage and the current of the battery,
wherein the control unit is configured to:
determine, based on the electric state of the battery, whether to execute a capacity recovery process including a first capacity recovery routine and a second capacity recovery routine, and
when it is determined to execute the capacity recovery process, sequentially execute the first capacity recovery routine and the second capacity recovery routine,
wherein the first capacity recovery routine is a procedure that discharges the battery until a SOC of the battery decreases to a reference SOC, and
wherein the second capacity recovery routine is a procedure that rests the battery during a reference time or more from a completion time point of the first capacity recovery routine.

2. The battery capacity recovery apparatus according to claim 1, wherein at least one of the reference SOC and the reference time is predetermined.

3. The battery capacity recovery apparatus according to claim 2, wherein the reference SOC is 0% or more and less than 20%, and
wherein the reference time is 10 hours or more.

4. The battery capacity recovery apparatus according to claim 1, wherein the control unit is configured to determine at least one of a reference constant current associated with the first capacity recovery routine, the reference SOC, and the reference time, based on a full charge capacity of the battery.

5. The battery capacity recovery apparatus according to claim 4, wherein the control unit is configured to determine the reference constant current from first relationship data in which a predetermined positive corresponding relationship between the full charge capacity and the reference constant current is defined.

6. The battery capacity recovery apparatus according to claim 4, wherein the control unit is configured to determine the reference SOC from second relationship data in which a predetermined positive corresponding relationship between the full charge capacity and the reference SOC is defined.

7. The battery capacity recovery apparatus according to claim 4, wherein the control unit is configured to determine the reference time from third relationship data in which a predetermined negative corresponding relationship between the full charge capacity and the reference time is defined.

8. The battery capacity recovery apparatus according to claim 1, wherein the control unit is configured to execute the capacity recovery process under the condition that an increase amount of accumulated discharging capacity of the battery from a completion time point of a previous capacity recovery process is greater than or equal to a reference capacity and the battery is at rest.

9. The battery capacity recovery apparatus according to claim 8, wherein the control unit is configured to determine the reference capacity based on a full charge capacity of the battery.

10. The battery capacity recovery apparatus according to claim 1, wherein the control unit is configured to execute the capacity recovery process under the condition that a decrease amount of a full charge capacity of the battery from a completion time point of a previous capacity recovery process is greater than or equal to a threshold capacity and the battery is at rest.

11. The battery capacity recovery apparatus according to claim 1, wherein the battery includes lithium metal as a negative electrode active material and sulfur as a positive electrode active material.

12. A battery pack, comprising the battery capacity recovery apparatus according to any one of claims 1 to 11.

13. An electric vehicle, comprising the battery pack according to claim 12.

14. A battery capacity recovery method, comprising
determining an electric state of a battery based on time series data of each of voltage and current of the battery;
determining, based on the electric state of the battery, whether to execute a capacity recovery process including a first capacity recovery routine and a second capacity recovery routine;
when it is determined to execute the capacity recovery process, executing the first capacity recovery routine; and
in response to completion of the first capacity recovery routine, executing the second capacity recovery routine,
wherein the first capacity recovery routine is a procedure that discharges the battery until a SOC of the battery decreases to a reference SOC, and
wherein the second capacity recovery routine is a procedure that rests the battery during a reference time or more from a completion time point of the first capacity recovery routine.
